# EUROPEAN PATENT APPLICATION

(11) **EP 1 998 200 A2**
(43) Date of publication of application: **03.12.2008**
(21) Application number: 08009781.9
(22) Date of filing: 29.05.2008
(51) Int. Cl.: G02B 6/44

(54) **Re-accessible antirodent and anti-squeezing system of microtubes for laying optical microcables in wiring closets and/or wireways**

(30) Priority: 01.06.2007 IT TO20070069
(71) Applicant: New Font S.r.l., 06024 Gubbio (PG) (IT)
(72) Inventor: Edera, Egisto, 10147 Torino (IT)
(74) Representative: Lotti, Giorgio

(57) **Abstract**

A re-accessible antirodent and anti-squeezing system (1) of microtubes for laying optical microcables in wiring closets (2) and/or wireways; the system (1) is designed to be set between a pipe (T1) at inlet to the wiring closet (2) and a pipe (T2) at outlet from the wiring closet (2) and comprises, in combination, a tubular protection (10) that can be inspected, which extends along the wiring closet (2), and, for each said pipe (T1, T2), a closing cover (2) provided with an inlet portion (21) that can be gripped on the corresponding pipe (T1, T2), an outlet portion (22) engaged by the tubular protection (10), and a sealing membrane (23) set between the inlet portion (21) and the outlet portion (22) and provided with a plurality of compartments (24) (25) for passage of the microtubes; a plurality of safety clamps (50) is arranged along the tubular protection (10) possibly in areas corresponding to changes of direction of the tubular protection (10), and in areas corresponding to the two covers (2).

## Description

The present innovation relates to a re-accessible antirodent and anti-squeezing system of microtubes for laying optical microcables in wiring closets and/or wireways and cable troughs.

In general, transit of optical microcables in the inspection and junction boxes occurs by feeding the optical microcables within a main pipe up to the inlet of the wiring closet and reintroducing the optical microcables themselves within another main pipe at outlet from the wiring closet. By so doing, there arise substantially two types of drawbacks:
- the possible water that could flood the wiring closet could also easily penetrate the main pipe; and
- the microtubes remain exposed to potential tampering as well as to the action of rodents.

The purpose of the present innovation is to provide a re-accessible antirodent and anti-squeezing system of microtubes for laying optical microcables in wiring closets and/or wireways, which will enable a simple and inexpensive solution to the problems described above.

According to the present innovation, a re-accessible antirodent and anti-squeezing system of microtubes for laying optical microcables in wiring closets and/or wireways is provided, the system being designed to be set between a pipe at inlet to the wiring closet and a pipe at outlet from the wiring closet and being characterized in that it comprises, in combination, a tubular protection that can be inspected extending along the wiring closet, and, for each said pipe, a closing cover provided with an inlet portion that can be gripped on the corresponding pipe, an outlet portion engaged by the tubular protection, and a sealing membrane set between the inlet portion and the outlet portion and provided with a plurality of compartments for passage of the microtubes; a plurality of safety clamps being arranged along the tubular protection possibly in areas corresponding to changes of direction of the tubular protection, and in areas corresponding to the two covers.

The innovation will now be described with reference to the annexed drawings, which illustrate a non-limiting example of embodiment thereof, and in which:
- Figure 1 is a schematic view of a preferred embodiment of a re-accessible antirodent and anti-squeezing system of microtubes for laying optical microcables in wiring closets and/or wireways made according to the present innovation;
- Figure 2 is an exploded perspective view of a detail of the system of Figure 1;
- Figure 3 is a perspective view of the detail of Figure 2 in an operative fixing condition;
- Figure 4 is a plan view of a detail of Figure 1; and
- Figure 5 is an exploded perspective view of a detail of Figure 4.

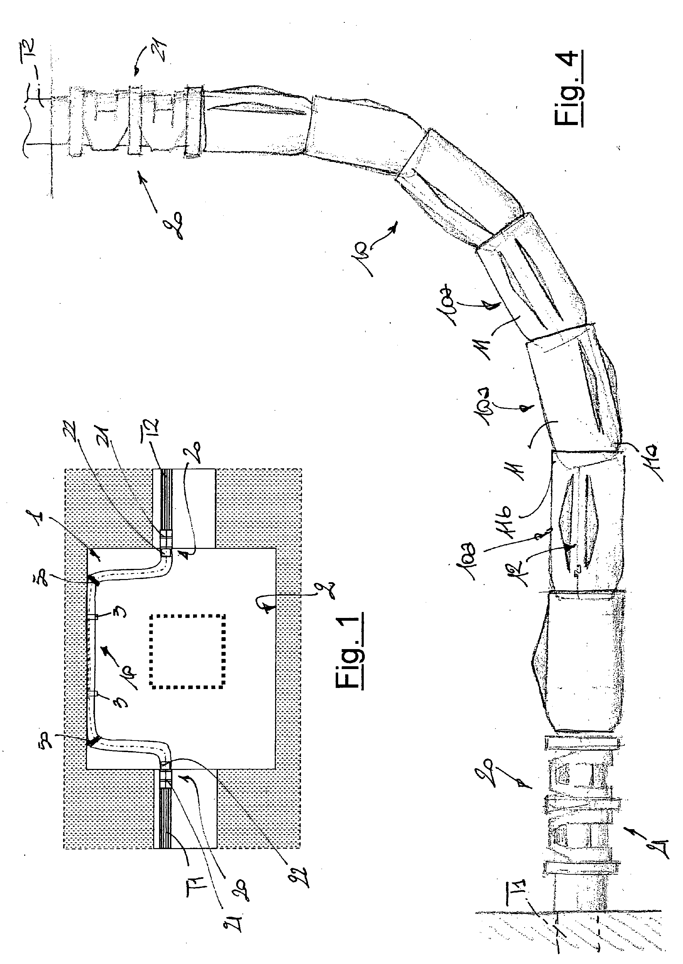

With reference to Figure 1, designated as a whole by 1 is a re-accessible antirodent and anti-squeezing system of microtubes for laying optical microcables in wiring closets 2 and/or wireways and cable troughs.

The system 1 is designed to be set between a pipe T1 for feed of the microtubes to the wiring closet 2 and a pipe T2 for outlet of the microtubes from the wiring closet 2 for protecting the microtubes of the optical microcables within the wiring closet 2 itself and to enable, in any case, accessibility of the optical microcables themselves. to the microtubes

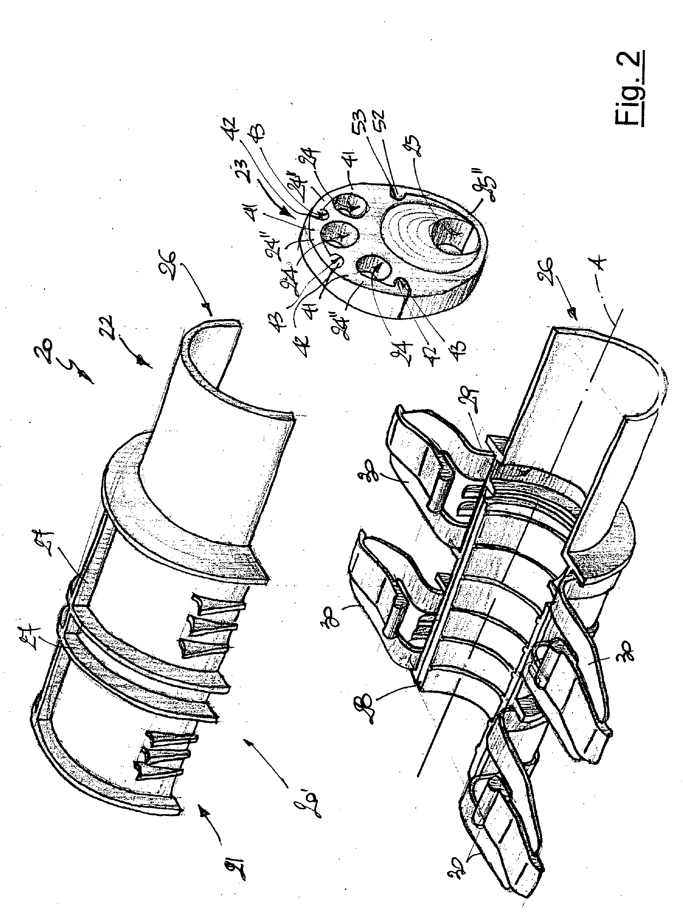

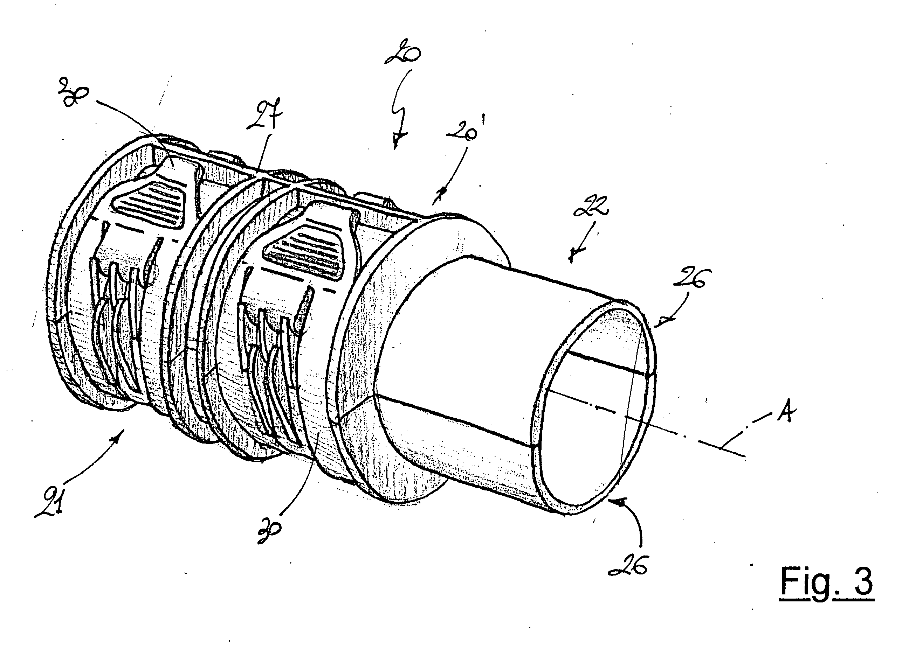

The system 1 comprises a tubular protection 10 that can be inspected, which extends along the wiring closet 2 and is designed to be rested on one or more supports 3, and, for each pipe T1/T2, a closing cover 20, which, as is better illustrated in Figures 2 and 3, is provided with an inlet portion 21 that can be gripped on the corresponding pipe T1/T2, and an outlet portion 22 engaged by the tubular protection 10.

The system 1 moreover comprises a plurality of safety clamps 50, which are arranged along the tubular protection 10 in areas corresponding to changes of direction of the tubular protection 10 itself, and in areas corresponding to the two covers 20 arranged at the opposite end of the tubular protection 10.

Each cover 20 is moreover provided with a corresponding sealing membrane 23, which is made of silicone material, is set between the inlet portion 21 and the outlet portion 22, and is provided with three compartments 24 for passage of the microtubes, and a compartment 25 for passage of a cable having a diameter larger than that of the microtubes.

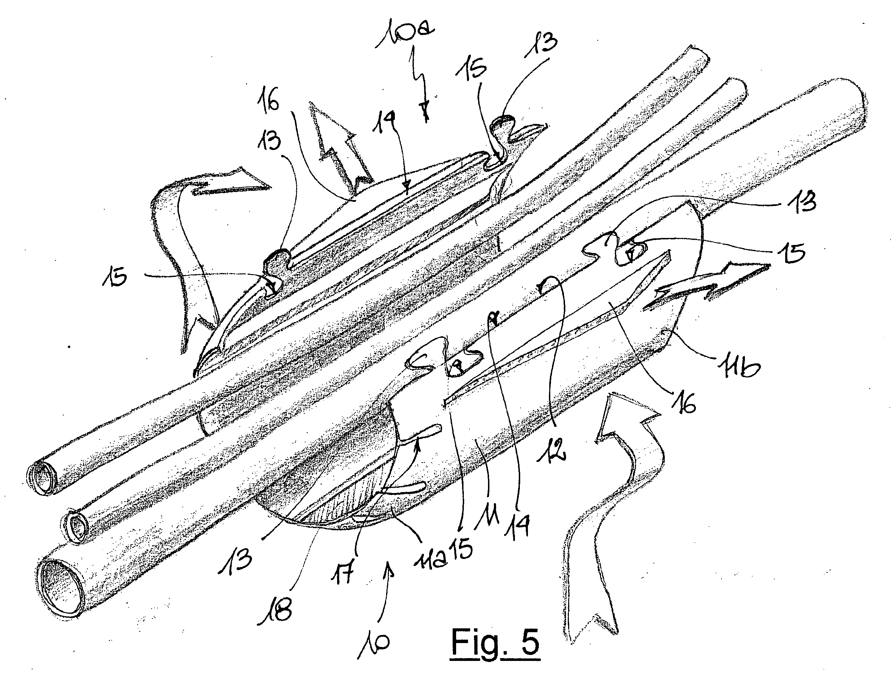

As illustrated in Figures 4 and 5, the protection 10 is defined by a modular pipe comprising a plurality of segments 10a, which can be inserted in series with respect to one another until the desired length is reached, i.e., the distance within the wiring closet 2 between the pipes T1 and T2, and are each provided with a tubular body 11 tapered externally at one end 11a and shaped internally at one opposite end 11b to enable orientation of a body 11 with respect to another body 11 fitted thereto.

Each body 11 moreover has a respective longitudinal slit 12 extending throughout its axial length in such a way that it can be opened in book fashion and envelop the microtubes, and two tabs 13 made along respective edges 14 delimiting the slit 12 and designed to be inserted in respective seats 15 made in respective edges 14 opposite to the ones having the tabs 13. In particular, each tab 13 carries at its own side a seat 15, and is shaped like a mushroom so as to be inserted by snap action in the seat 15 made on the opposite edge 14 for reclosing securely the body 11.

Finally, each body 11 is provided with two external tongues 16 arranged laterally and parallel to each edge 14 to define gripping elements for facilitated opening of the body 11 itself.

For increasing the capacity of co-penetration and mutual orientation of the segments 10a, the end 11a of the corresponding bodies 11 has a plurality of axial notches 17, whilst for increasing resistance to squeezing of the segments 10a, each body 11 is internally provided with a plurality of reinforcement ribs 18 arranged parallel to the edges 14.

According to an embodiment of the protection 10 (not illustrated), but which can be easily deduced from what has been described, the protection 10 itself can be defined by a continuous pipe with ringed metal protection provided with a longitudinal cut, two protection edges extending along the cut, and a plurality of closing clamps arranged along the pipe for closing the pipe itself in such a way that it can be selectively opened and inspected. Alternatively, once again, the protection 10 itself can be defined by a continuous pipe with spiralled metal protection designed to collapse lengthwise like a concertina to enable inspection of the tubes.

In any case, within the protection 10, the microtubes and the possible cable will be protected from external agents, for example water and/or rodents, along the entire stretch through the wiring closet 2.

According to what is illustrated more clearly in Figures 2 and 3, the cover 20 is defined by a cylindrical body 20' extending along a longitudinal axis A with an internal diameter along the inlet portion 21 larger than an internal diameter along the outlet portion 22, and with an axial length of the inlet portion 21 larger than an axial length of the outlet portion 22. The body 20' comprises two rigid half-shells 26, each of which is provided on the external part and in areas corresponding to the inlet portion 22 with a plurality of stiffening ribs 27, and is provided once again in areas corresponding to the inlet portion 22, but in the internal part, with a removable gasket 28.

The gasket 28 of each half-shell 26 is defined by a clamp of rubbery material set up against the half-shell 26 itself, concurs to reducing the internal diameter of the inlet portion 21, and, since it is designed to set itself in strict contact with the corresponding pipe T1/T2, ensures water-tightness with the latter preventing any entry of water and/or moisture into the cover 2.

In areas corresponding to the transition between the portion 21 and the portion 22, each half-shell 26 comprises a respective internal housing 29, which, with the housing 29 of the other half-shell 26, defines an annular seat for housing the sealing membrane 23.

Finally, the cover 2 comprises four external closing tabs 30, which are fixed with respect to the inlet portion 21 of one of the two half-shells 26 and can be fitted by snap action on the other of the two half-shells 26 to render the two half-shells 26 fixed with respect to one another and to the corresponding pipe T1/T2 and to compress the gaskets 28 on the pipe T1/T2 itself so as to provide, at the same time, both an effect of water-tightness and anchorage of the cover 2 to the pipe T1/T2.

The sealing membrane 23 is defined by a disk 23' having a thickness substantially equal to the axial thickness of the annular seat formed by the housings 29, and, as described above, has three compartments 24 and one compartment 25, which, when they are not engaged by respective microtubes or by the cable, are closed by respective closing cylinders 24' and 25' made of the same material as the membrane 23.

The membrane 23 is moreover provided for each compartment 24 with a respective fitting clamp 24", which delimits towards the outside the corresponding compartment 24 and enables direct access to the compartment 24 from outside. In particular, each clamp 24" extends like a bridge spanning a corresponding compartment 24, and comprises a root 41 made of a single piece with the aforesaid disk 23', and a tooth 42 inserted in a disengageable way within a respective seat 43 made once again in the disk 23' and substantially in an area corresponding to the root 41 of the contiguous clamp 23". By disengaging the tooth 42 from the corresponding seat 43 and raising in a radial direction the corresponding clamp 24", it is possible to gain direct access to the compartment 24 for an easy and fast installation of the microbes within the compartment 24 itself.

Likewise, the membrane 23 is finally provided with a fitting clamp 25", which delimits the compartment 25 outwards, and enables direct access from outside to the compartment 25. The clamp 25" extends like a bridge spanning the compartment 25, and comprises a root 51 made of a single piece with the aforesaid disk 23', and a tooth 52 inserted in a disengageable way within a respective seat 53 made once again in the disk 23'. By disengaging the tooth 52 from the corresponding seat 53 and raising the corresponding clamp 25" in a radial direction, direct access can be gained to the compartment 25 for an easy and fast installation of the cable within the compartment 25 itself.

Since the dimensions of the diameter of the cable are not standard as the ones of the microtubes, the cylinder 25' for closing the compartment 25 is of the layered type and can be sized so that it has the same dimension as the cable itself, thus coming to fill the part of compartment 25 not occupied by the cable itself.

In use, the microtubes and the cable are inserted within the compartments 24 and 25 and within the tubular protection 10 that will be set throughout the length of the wiring closet 2. Then, the two half-shells 26 are reclosed on the pipes T1/T2 and on the opposite ends of the protection 10 so as to include the corresponding membrane 23 inside it and to clamp in the same way both the ends of the pipes T1/T2 and the ends of the protection 10.

Then, also the protection 10 will be reclosed along its own longitudinal slit 12 by means of the clamps 13, whilst the outlet portions 22 will be gripped with the safety clamps 50 on the pipes T1/T2, and the portion 10 will be clamped in the changes of direction thereof also by means of purposely provided supports with which the wiring closet 2 will be provided.

From the foregoing description, it emerges clearly that the covers 2 enables watertight insulation of the pipes T1/T2, as well as an easy and fast positioning of the system 1 as a whole, likewise providing a safe protection against rodents and other external agents.

In addition, the presence of the clamps 13 and of the tabs 30 enables easy re-opening of the entire system 1 and fast inspection of the microtubes, thus reducing the times of intervention and maintenance.

It is understood that the invention is not limited to the embodiment described and illustrated herein, which is to be considered merely as example of embodiment of the re-accessible antirodent and anti-squeezing system of microtubes for laying optical microcables in wiring closets and/or wireways, which can instead undergo further modifications as regards shapes and arrangements of parts, details of construction and assembly.

## Claims

1. A re-accessible antirodent and anti-squeezing system (1) of microtubes for laying optical microcables in wiring closets (2) and/or wireways, the system (1) being designed to be set between a pipe (T1) at inlet to the wiring closet (2) and a pipe (T2) at outlet from the wiring closet (2) and being **characterized in that** it comprises, in combination, a tubular protection (10) that can be inspected, which extends along the wiring closet (2), and, for each said pipe (T1, T2), a closing cover (2) provided with: an inlet portion (21) that can be gripped on the corresponding pipe (T1, T2); an outlet portion (22) engaged by the tubular protection (10); and a sealing membrane (23) set between the inlet portion (21) and the outlet portion (22) and provided with a plurality of compartments (24) (25) for passage of the microtubes; a plurality of safety clamps (50) being arranged along the tubular protection (10) possibly in areas corresponding to changes of direction of the tubular protection (10), and in areas corresponding to the two covers (2).

2. The re-accessible system according to Claim 1, **characterized in that** said tubular protection (10) is defined by a modular pipe comprising a plurality of segments (10a) that can be inserted in series in one another.

3. The re-accessible system according to Claim 2, **characterized in that** each segment (10a) comprises a tubular body (11) tapered externally at one end (11a) and shaped internally at one opposite end (11b) to enable orientation of a body (11) with respect to another body (11) fitted thereto.

4. The re-accessible system according to Claim 3, **characterized in that** each body (11) moreover has a respective longitudinal slit (12) extending throughout its axial length in such a way that it can be opened in book fashion and envelop the microtubes, and two tabs (13), which are made along respective delimiting edges (14) that define the slit (12) and are designed to be inserted in respective seats (15) made in respective edges (14) opposite to the ones having the tabs (13).

5. The re-accessible system according to Claim 4, **characterized in that** each body (11) is provided with gripping elements for facilitated opening of the body (11) itself defined by an external tongue (16) for each edge (14); each tongue (16) being set laterally and parallel to the corresponding edge (14).

6. The re-accessible system according to any one of the preceding claims, **characterized in that** said cover (2) comprises two half-shells (26) and a removable gasket (28) set within the inlet portion (21) of each half-shell (26) and designed to set itself in watertight contact with the corresponding pipe (T1, T2).

7. The re-accessible system according to Claim 6, **characterized in that** said cover (2) comprises an internal annular housing (29) set between the inlet portion (21) and the outlet portion (22) for housing said sealing membrane (23).

8. The re-accessible system according to Claim 7, **characterized in that** said cover (2) comprises a plurality of external closing tabs (30), which are fixed with respect to one of the two said half-shells (26) and can be fitted on the other of the two said half-shells (26) to render the two half-shells (26) fixed with respect to one another and to the corresponding pipe (T1, T2).

9. The re-accessible system according to Claim 8, **characterized in that** said tabs (30) are arranged on the inlet portion (21) of the cover (2).

10. The re-accessible system according to any one of the preceding claims, **characterized in that** said sealing membrane (23) is a membrane (23) made of silicone material provided with a large number of cylinders for closing each compartment (24) (25) for passage not occupied by a corresponding microtube, and with a fitting clamp (24") (25") for each compartment (24) (25), which delimits the compartment (24) (25) itself and can be reclosed on the membrane (23) itself.

11. The re-accessible system according to Claim 10, **characterized in that** said sealing membrane (23) is also provided with a compartment (25) for passage of a cable for feed of the microtubes.
